# FASCICULE DE BREVET EUROPEEN

(11) **EP 1 694 977 B1**
(45) Date de publication et mention de la délivrance du brevet: **28.02.2007**
(21) Numéro de dépôt: 04816503.9
(22) Date de dépôt: 02.12.2004
(51) Int. Cl.: F16D 48/06

(54) **MODULE DE SUPERVISION DE LA TRANSMISSON**
GETRIEBEÜBERWACHUNGSMODUL
TRANSMISSION MONITORING MODULE

(30) Priorité: 09.12.2003 FR 0351010
(43) Date de publication de la demande: 30.08.2006
(73) Titulaire: VALEO EMBRAYAGES, 80009 Amiens (FR)
(72) Inventeur: MAUREL, Pascal, F-75009 PARIS (FR); HOFFMANN, Christian, F-75014 PARIS (FR)
(86) Numéro de dépôt international: PCT/FR2004/050641
(87) Numéro de publication internationale: WO 2005/057040

(56) Documents cités:
- DE-A- 10 060 642
- DE-A- 10 126 080
- FR-A- 2 796 894

## Description

L'invention concerne un module de supervision de la transmission dans un dispositif adaptatif piloté d'accouplement entre un moteur et une boîte de vitesses dans un véhicule automobile.

Un tel dispositif comprend un moyen d'accouplement entre l'arbre de sortie du moteur à combustion interne du véhicule et un arbre d'entrée de la boîte de vitesses qui peut être du type mécanique à plusieurs rapports de transmission avec ou sans robotisation des changements de rapports. Le moyen d'accouplement est en général un embrayage à friction, commandé par un actionneur piloté par un système de traitement de l'information en fonction d'un certain nombre de paramètres mesurés ou estimés tels que des positions, des vitesses, des accélérations, des efforts, des couples, des pressions et des tensions électriques.

L'actionneur de l'embrayage agit sur la position d'un organe mobile de l'embrayage tel par exemple que la butée d'embrayage qui détermine la position d'un plateau de pression et la charge appliquée à ce plateau par un diaphragme annulaire pour le serrage des garnitures de friction d'un disque relié à un arbre d'entrée de la boîte de vitesses, ce serrage déterminant le couple transmis par l'embrayage.

L'actionneur peut aussi agir directement sur la charge appliquée sur le plateau de pression par une liaison mécanique ou hydraulique par exemple.

La commande automatisée de l'embrayage doit prendre en compte un grand nombre de grandeurs physiques, de grandeurs d'état et de grandeurs de commande, qui sont mesurées ou estimées sur le moteur, sur la boîte de vitesses et sur le reste du véhicule et de signaux représentant la volonté du conducteur, l'adaptation du comportement de la transmission au style de conduite du conducteur, l'état dynamique du véhicule et l'état du dispositif de commande (initialisation, mode normal, mode dégradé, apprentissage, arrêt, ...) etc...

On a déjà proposé de commander l'embrayage pour lui faire transmettre un couple désiré, mais le couple transmis par l'embrayage varie de façon non linéaire en fonction de la pression ou de la position d'un organe de commande tel que la butée d'embrayage par exemple, il varie d'un embrayage à l'autre en raison des dispersions de fabrication, et il varie aussi en fonction d'un certain nombre de paramètres tels que la température, l'état des garnitures et des surfaces de friction, du mécanisme d'embrayage, etc... Un dispositif incluant les caractéristiques du préambule de la revendication indépendante est connu du document DE-A-100 60 642. Il est donc très difficile, voire impossible de commander automatiquement l'embrayage de façon correcte pour lui faire transmettre un couple désiré qui a été déterminé par des moyens de calcul et de traitement de l'information.

L'invention propose une solution à ce problème, qui consiste à piloter l'embrayage de façon linéaire en couple transmissible, au moyen d'un dispositif de commande partagé en plusieurs modules de pilotage qui sont destinés à compenser en cascade les dispersions des divers composants de la transmission du véhicule et qui comprennent :
- un module de supervision de la transmission, mettant en oeuvre des stratégies de gestion de l'agrément de conduite qui pilotent l'embrayage en couple et le moteur du véhicule en vitesse et/ou en couple et qui sont destinées à compenser la variabilité du comportement dynamique du moteur, de la boîte de vitesses et du reste du véhicule, notamment des composants de la transmission reliés aux roues motrices du véhicule,
- un module de pilotage de l'embrayage en couple, qui permet de déterminer, entre autres, une bonne valeur de consigne d'une grandeur physique de commande interne ou externe de l'embrayage pour obtenir un couple transmissible souhaité dans l'embrayage en fonction d'une consigne de couple à transmettre, délivrée par le module de supervision de la transmission, et de divers signaux de grandeurs physiques, d'état ou de commande qui sont mesurées sur le moteur, sur la boîte de vitesses et sur le reste du véhicule,
- et un module de pilotage d'un actionneur de l'embrayage qui permet de commander l'actionneur pour obtenir une grandeur physique de commande interne ou externe de l'embrayage en fonction d'une consigne fournie par le module de pilotage en couple et de divers signaux de grandeurs physiques, d'état ou de commande qui sont mesurées sur le moteur, sur la boîte de vitesses et sur le reste du véhicule.

Ainsi, l'actionneur et son module de pilotage sont vus comme à peu près parfaits par le module de pilotage en couple de l'embrayage et l'embrayage et son module de pilotage sont vus eux-mêmes comme à peu près parfaits par le module de supervision qui gère les stratégies de pilotage de l'embrayage et du moteur en tenant compte du comportement dynamique du moteur, de la boîte de vitesses et du reste du véhicule.

En partageant ce dispositif de commande en trois modules qui compensent chacun des variabilités de comportement d'éléments ou d'organes différents, on améliore les performances globales du dispositif et on tient davantage compte des variations des paramètres représentatifs de l'état ou de la commande des divers composants de la transmission du véhicule.

Le module de supervision de la transmission selon l'invention comprend des moyens d'élaboration d'une variation de consigne de couple transmissible par l'embrayage, à partir de signaux de commande et d'informations mesurées ou estimées sur le comportement dynamique de la transmission du véhicule, et des moyens d'addition de cette variation à une consigne précédente de couple transmissible.

L'élaboration d'une variation de consigne de couple transmissible permet à chaque instant de contrôler le confort et l'efficacité de la manoeuvre de l'embrayage.

Selon une autre caractéristique de l'invention, ce module de supervision comprend également des moyens de calcul de limites maximale et minimale de la variation de consigne de couple et des moyens d'application de ces limites à la variation de consigne de couple qui est fournie par les moyens d'élaboration précités.

Ces limites maximale et minimale de la variation de la consigne sont calculées de manière à assurer notamment le confort du conducteur et la tenue des organes mécaniques de la transmission en réduisant l'usure et l'échauffement.

Dans un mode de réalisation préféré de l'invention, les moyens d'élaboration de la variation de consigne de couple comprennent une boucle ouverte de détermination de la variation de consigne de couple à partir d'une grandeur physique mesurée sur le véhicule, d'une grandeur temporelle et/ou d'une intention du conducteur du véhicule, ainsi que d'un profil prédéterminé de variation, une boucle fermée de détermination de ladite variation de consigne de couple par régulation ou asservissement d'une grandeur physique mesurée sur le véhicule, et des moyens de pondération et d'addition des consignes de couple fournies par la boucle ouverte et par la boucle fermée précitée.

La détermination en boucle ouverte permet par exemple d'éviter le calage du moteur à combustion interne du véhicule.

La détermination en boucle fermée permet de s'affranchir des dispersions et des effets de vieillissement des organes mécaniques et électriques du véhicule de sorte que la manoeuvre de l'embrayage reste répétable sur la durée de vie du véhicule et que le conducteur ne ressent pas de variations de l'agrément de conduite de son véhicule.

La pondération et l'addition des variations de consigne de couple qui sont fournies par la boucle ouverte et par la boucle fermée permettent des transitions en douceur dans le pilotage de l'embrayage entre une stratégie de pilotage et une autre, en assurant la continuité de la variation du couple transmissible dans l'embrayage.

Selon encore une autre caractéristique de l'invention, la boucle fermée de détermination de la variation de consigne de couple comprend des moyens de régulation ou d'asservissement de la grandeur physique précitée, ces moyens de régulation déterminant une consigne de cette grandeur, à partir d'un profil donné de variation en fonction d'une grandeur physique mesurée sur le véhicule, d'une grandeur temporelle ou d'une intention du conducteur, des moyens de mise à l'échelle et de filtrage de cette consigne et de la grandeur correspondante mesurée sur le véhicule, et des moyens de comparaison des signaux de sortie de ces moyens de mise à l'échelle et de filtrage pour générer un signal d'erreur appliqué à un correcteur qui détermine une variation de couple transmissible permettant d'atteindre ou de suivre le profil donné de variation de ladite grandeur physique.

Cette grandeur physique peut être l'accélération du véhicule, la vitesse ou l'accélération du moteur, ou la vitesse de glissement de l'embrayage.

Dans le module de supervision selon l'invention, les moyens de calcul des limites maximale et minimale de la variation de consigne de couple sont du même type que les moyens d'élaboration précités et comprennent également une boucle ouverte et une boucle fermée de détermination de la limite correspondante, les sorties de ces deux boucles étant pondérées et ajoutées l'une à l'autre.

L'invention s'applique également à la commande de l'accouplement entre l'arbre de sortie d'un moteur d'un véhicule automobile et une boîte de vitesses robotisée qui comprend deux arbres d'entrée en parallèle reliés chacun par un embrayage à l'arbre de sortie du moteur du véhicule.

Dans ce cas, chaque embrayage est commandé par un actionneur commandé lui-même par un module de pilotage d'actionneur et par un module de pilotage d'embrayage en couple, les deux modules de pilotage de l'embrayage étant eux-mêmes commandés par un même module de supervision de la transmission.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est un schéma fonctionnel d'un véhicule équipé d'un dispositif adaptatif piloté d'accouplement entre un moteur et une boîte de vitesses à un seul arbre d'entrée.
- la figure 2 est un schéma fonctionnel d'un véhicule équipé d'une variante de ce dispositif adaptatif piloté d'accouplement, dans le cas d'une boîte de vitesses robotisée à deux arbres d'entrée parallèles ;
- la figure 3 est une représentation schématique des caractéristiques essentielles du dispositif adaptatif piloté d'accouplement ;
- la figure 4 représente schématiquement un module de supervision de la transmission selon l'invention ;
- la figure 5 représente de façon plus détaillée l'un des blocs du module de la figure 4.

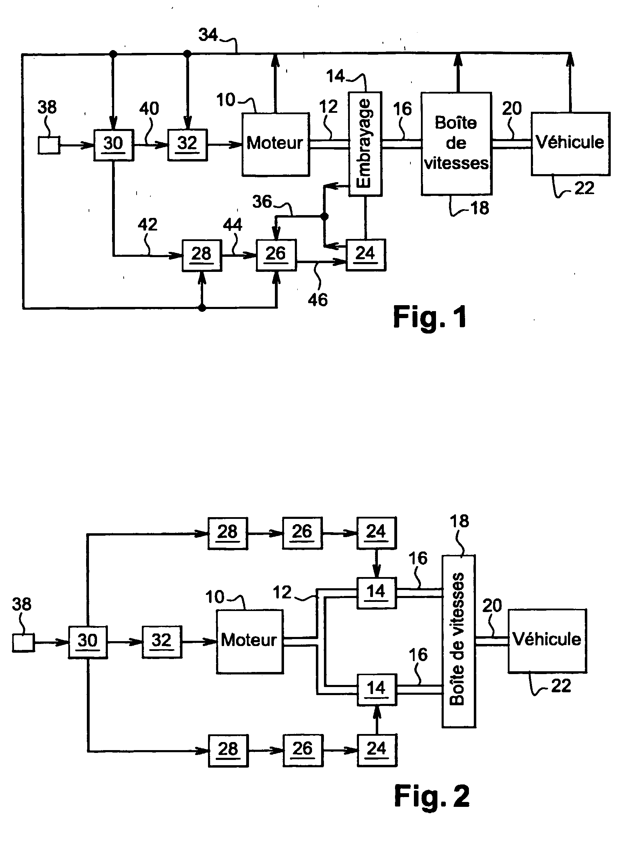

On a représenté schématiquement en figure 1 un véhicule automobile équipé d'un dispositif adaptatif piloté d'accouplement entre le moteur et la boîte de vitesses du véhicule, la référence 10 désignant le moteur à combustion interne du véhicule dont l'arbre de sortie 12 est relié par un embrayage 14 à l'arbre d'entrée 16 de la boîte de vitesses 18, par exemple robotisée, qui est du type mécanique à plusieurs rapports de transmission et dont l'arbre de sortie 20 est relié à des roues motrices du véhicule 22.

L'embrayage 14 est commandé par un actionneur 24 d'un type approprié qui agit par exemple sur la position d'une butée d'embrayage. D'une façon bien connue de l'homme du métier, cette butée d'embrayage agit sur des doigts radiaux d'un diaphragme annulaire qui est porté par un couvercle d'embrayage et qui agit axialement sur un plateau de pression de l'embrayage pour le serrage des garnitures de friction d'un disque relié en rotation à l'arbre d'entrée 16 de la boîte de vitesses. L'embrayage peut également être du type ouvert au repos, l'actionneur réalisant le serrage des garnitures par un moyen mécanique ou hydraulique. Les garnitures peuvent travailler à sec ou dans l'huile.

Le dispositif adaptatif piloté d'accouplement comprend un module 26 de pilotage de l'actionneur 24, ce module 26 recevant un signal de consigne généré par un module 28 de pilotage de l'embrayage en couple, ce module 28 recevant lui-même un signal de consigne de couple transmissible par l'embrayage fourni par un module 30 de supervision de la transmission qui fournit également des signaux de pilotage et de consigne à un système 32 de pilotage du moteur 10 du véhicule.

Des informations 34 en provenance du véhicule, du moteur et/ou du système de pilotage 32, et de la boîte de vitesses, par exemple telles que la vitesse de rotation du moteur, le couple fourni par le moteur, la quantité de carburant, la quantité d'air, le rapport de transmission utilisé, la température ambiante, la température du liquide de refroidissement, la vitesse du véhicule, la vitesse de rotation de l'arbre d'entrée de la boite de vitesses, la vitesse des roues du véhicule, la tension électrique fournie par la batterie du véhicule, etc... sont appliquées au module 26 de pilotage de l'actionneur, au module 28 de pilotage de l'embrayage en couple, au module 30 de supervision de la transmission et au système 32 de pilotage du moteur du véhicule.

Des informations 36 relatives à l'actionneur 24 et à l'embrayage 14 telles que des valeurs d'efforts, de pression, de position d'un organe mobile de l'actionneur, de position de la butée d'embrayage, de tension électrique, d'intensité de courant électrique, de température, etc... sont appliquées à des entrées du module 26 de pilotage de l'actionneur.

Des informations 38 appliquées à des entrées du module de supervision de la transmission 30 comprennent des signaux de gestion et d'adaptation de stratégies de pilotage de la transmission, relatives au fonctionnement du véhicule, aux intentions du conducteur, au mode automatique de commande de la transmission, à l'adaptabilité du comportement de la transmission, à des niveaux de confort et de performances, etc...

Le module 30 de supervision de la transmission génère, à partir de ces informations et des stratégies de gestion enregistrées en mémoire, des signaux 40 de pilotage et/ou de consigne qui sont appliqués au système 32 de pilotage du moteur 10 et des signaux de consigne 42 appliqués au module 28 de pilotage en couple de l'embrayage 14, les signaux 42 comportant un signal de consigne de couple transmissible par l'embrayage 14.

Le module 28 de pilotage de l'embrayage reçoit ces signaux 42 et les informations 34 fournies par le moteur 10, la boîte de vitesses 18 et le reste du véhicule 22 et génère un signal 44 de pilotage du module 26 de pilotage de l'actionneur 24, ce signal 44 étant un signal de consigne du paramètre de commande de l'embrayage 14 tel par exemple que la position de la butée d'embrayage.

Le module 26 de pilotage de l'actionneur reçoit ce signal de consigne 44, les informations 34 fournies par le moteur 10, par la boîte de vitesses 18 et par le reste du véhicule 22 et les informations 36 relatives à l'embrayage 14 et à son actionneur 24, et génère un signal 46 de commande de l'actionneur 24.

Dans la variante de réalisation de la figure 2, on retrouve sensiblement les mêmes composants et les mêmes modules que dans le mode de réalisation de la figure 1, la différence étant que la boîte de vitesses 18 comprend deux arbres d'entrée 16 parallèles reliés chacun par un embrayage 14 à l'arbre de sortie 12 du moteur 10, chaque embrayage 14 étant commandé par un actionneur 24 commandé lui-même par un module de pilotage 26 du type précité et par un module 28 de pilotage en couple de l'embrayage correspondant.

Les deux modules 28 de pilotage en couple sont commandés par le même module 30 de supervision de la transmission qui commande également le système 32 de pilotage du moteur 10.

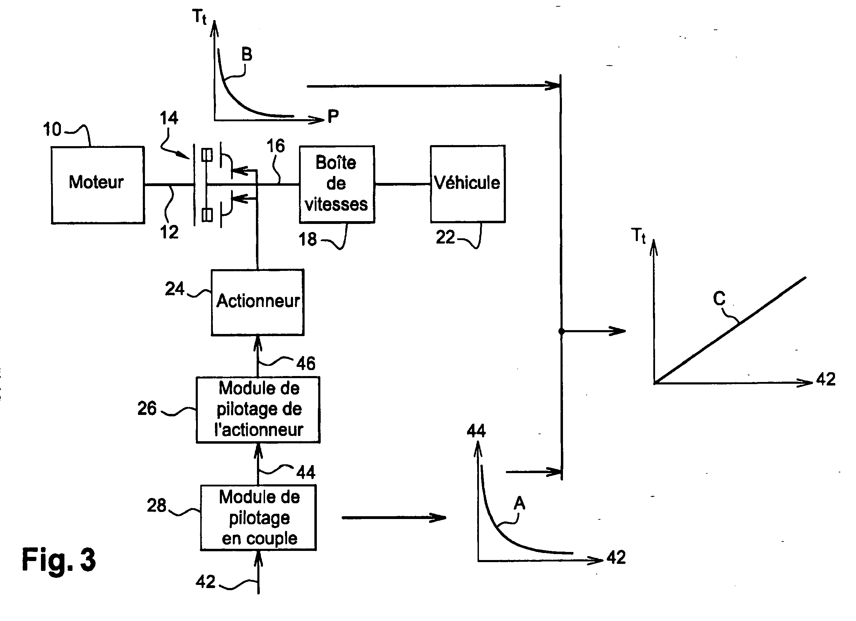

La figure 3 illustre schématiquement les caractéristiques essentielles du dispositif qui vient d'être décrit.

Le module de pilotage en couple 28 qui reçoit un signal 42 de consigne de couple transmissible par l'embrayage et qui génère un signal 44 de consigne d'un paramètre de commande appliqué au module 26 de pilotage de l'actionneur, génère ce signal de consigne 44 à partir d'une courbe apprise A qui est une courbe de variation du signal de consigne du paramètre de commande de l'embrayage 14 en fonction du signal 42, c'est-à-dire du couple transmissible désiré. La courbe A est l'inverse de la courbe B de transmission du couple Tt qui est transmis par l'embrayage en fonction de son paramètre de commande P qui est par exemple la position de la butée d'embrayage.

On voit que la courbe B n'est pas une variation linéaire du paramètre de commande P et que sa pente varie entre ses extrémités d'une valeur faible à une valeur élevée. En outre, la courbe B varie d'un véhicule à l'autre en raison des dispersions de fabrication des composants de l'embrayage, elle varie également en fonction du temps, en raison des variations de température de ses composants, de leur degré d'usure, des caractéristiques, des composants du mécanisme d'embrayage, etc...

Un avantage essentiel du dispositif qui vient d'être décrit est de linéariser la commande de l'embrayage grâce à l'utilisation dans le module de pilotage 28 d'une courbe caractéristique A qui est l'inverse de la courbe caractéristique B de fonctionnement de l'embrayage. Cette combinaison en série des deux courbes caractéristiques permet d'obtenir, comme représenté en partie droite de la figure 3 une caractéristique C de variation linéaire du couple Tt transmis par l'embrayage en fonction du signal 42 de consigne de couple transmissible.

Le pilotage du confort, représenté par la courbe du couple ou de l'accélération lors de la manoeuvre d'un embrayage est ainsi plus simple, plus performant, et réalisable en temps réel.

La courbe caractéristique utilisée par le module 28 de pilotage en couple est une courbe apprise, déterminée par calcul à partir de valeurs mesurées ou estimées du couple transmis Tt et du paramètre de commande P et d'un modèle mathématique simple de la courbe caractéristique, ce qui permet de suivre l'évolution de cette courbe caractéristique et de prendre en compte les variations des paramètres qui la déterminent.

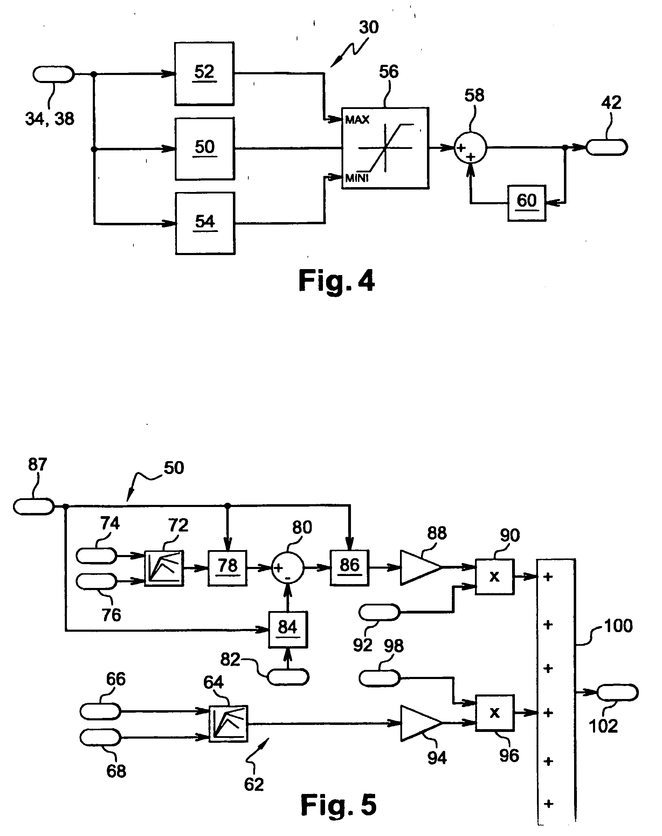

La figure 4 représente un mode de réalisation du module 30 de supervision de la transmission, qui génère un signal 42 de consigne de couple transmissible par l'embrayage à partir de stratégies de pilotage de transmission enregistrées en mémoire et d'informations 34, 38 en provenance du véhicule, du moteur et/ou du système de pilotage 32, et de signaux de gestion et d'adaptation des stratégies de pilotage.

Ce module 30 comprend essentiellement un bloc 50 de calcul d'une variation de consigne de couple transmissible qui est destiné, suivant le type, d'opération réalisé (démarrage du véhicule, changement de rapport de transmission, arrêt du véhicule) à réduire ou à augmenter le couple transmissible par l'embrayage. Le module 30 comprend également deux autres blocs 52, 54 de calcul d'une limite maximale et d'une limite minimale respectivement de la variation de consigne de couple transmissible, ces limites étant calculées de manière à assurer la tenue des organes mécaniques de la transmission et à limiter la dissipation d'énergie dans l'embrayage (c'est-à-dire à augmenter la durée de vie de l'embrayage).

Les sorties des blocs 50, 52 et 54 sont appliquées aux entrées d'un limiteur de façon à limiter ou non la variation de consigne de couple transmissible fourni par le bloc 50, la sortie du limiteur 56 étant ajoutée en 58 à la dernière consigne de couple transmissible mémorisée 60 pour donner ainsi le signal 42 de consigne de couple transmissible.

Le calcul d'une variation de couple transmissible pour déterminer la consigne de couple transmissible permet de contrôler à chaque instant le confort et l'efficacité de la manoeuvre de l'embrayage 14.

Un exemple de réalisation du bloc 50 de calcul de la variation de couple transmissible a été représenté en figure 5, cet exemple étant également valable pour les blocs 52 et 54 de calcul de la limite maximale et de la limite minimale de cette variation.

Le bloc 50 de la figure 5 comprend une boucle ouverte 62 de détermination de la variation de couple transmissible à partir d'un profil donné 64 de variation en fonction d'une grandeur physique 66 mesurée sur le véhicule et/ou d'une grandeur temporelle 68 (signal de commande déclenchant une horloge) ou d'une intention du conducteur, cette boucle ouverte 62 permettant par exemple de gérer et d'adapter une stratégie évitant, le calage du moteur à combustion interne du véhicule.

Le bloc 50 comprend également une boucle fermée 64 de détermination de la variation de couple transmissible à partir d'une boucle de régulation ou d'asservissement d'une grandeur physique du véhicule que l'on cherche à suivre ou à atteindre avec fidélité.

La boucle fermée 64 permet par exemple de piloter la fermeture de l'embrayage en fonction de l'accélération du véhicule afin de gérer le confort.

La consigne de la grandeur physique à contrôler est déterminée à partir d'un profil donné 72 de variation en fonction d'une autre grandeur physique 74 mesurée sur le véhicule ou d'une grandeur temporelle 76 (signal de commande déclenchant une horloge) ou d'une intention du conducteur. La consigne de la grandeur physique à réguler est mise à l'échelle et filtrée par un bloc 78 puis comparé en 80 à la mesure 82 de la grandeur à réguler mise à l'échelle et filtrée par un bloc 84.

La sortie du comparateur 80 est appliquée à un correcteur 86 qui calcule la variation de couple transmissible à appliquer à l'embrayage pour atteindre ou suivre le profil de consigne 72 de la grandeur de régulation. La sortie du correcteur 86 est pondérée en 88 et appliquée à une entrée d'un multiplicateur 90 dont une autre entrée reçoit un signal d'atténuation 92.

De même, le signal de variation de couple fourni par la boucle ouverte 62 est pondéré en 94 et appliqué à une entrée d'un multiplicateur 96 dont une autre entrée reçoit un signal d'atténuation 98. Les sorties des multiplicateurs 90 et 96 sont appliquées aux entrées d'un sommateur 100 dont la sortie fournit un signal 102 de variation de consigne de couple transmissible qui est appliqué à une entrée du limiteur 56.

Les signaux d'atténuation 92 et 98 sont des signaux compris entre 0 et 1 qui servent à atténuer ou non la variation de couple transmissible calculée par chacune des boucles 62, 70.

Les paramètres des moyens 78 et 84 de mise à l'échelle et de filtrage et ceux du correcteur 86 sont modifiés au moyen de signaux 87 pour être adaptés au comportement du véhicule, par exemple au style de conduite du conducteur.

La régulation ou l'asservissement en fonction d'une grandeur physique, réalisée par la boucle fermée 70, permet de s'affranchir des dispersions et des effets de vieillissement des organes mécaniques et électriques du véhicule participant à la génération de la grandeur de la régulation en fonction du couple transmissible par l'embrayage. La manoeuvre de l'embrayage reste alors répétable sur toute la durée de vie du véhicule sans que le conducteur ne ressente une variation de l'agrément de conduite de son véhicule.

On peut utiliser autant de grandeurs de régulation ou d'asservissement que l'on désire en fonction de ce que l'on cherche à maîtriser. Par exemple, pour maîtriser une sensation de confort au niveau du véhicule, on prendra comme grandeur de régulation ou d'asservissement l'accélération du véhicule. Si l'on veut réduire l'usure de l'embrayage, la grandeur de régulation ou d'asservissement sélectionnée est alors la vitesse de glissement de l'embrayage. Si l'on cherche à réduire les augmentations brutales du régime moteur alors que l'on n'a pas accès au contrôle moteur, la grandeur de régulation ou d'asservissement choisie est la vitesse ou l'accélération du moteur.

Le sommateur 100 et les atténuations 92 et 98 permettent des transitions en douceur dans le pilotage de l'embrayage en fonction d'une stratégie ou d'une autre en assurant une continuité de la variation du couple transmissible par l'embrayage.

Dans le cas d'un véhicule équipé d'une boîte de vitesses à deux arbres d'entrée parallèles comme représenté en figure 2, les correcteurs 86 du bloc de calcul 50 permettent d'effectuer le rejet d'une perturbation de la grandeur de contrôle, par exemple le confort, dans le cas où l'on ferme l'un des deux embrayages avec une consigne de couple transmissible qui varie en fonction d'une grandeur de régulation ou d'asservissement et où l'on ouvre l'autre embrayage en suivant une loi fixe prédéterminée.

## Revendications

1. Dispositif adaptatif piloté d'accouplement entre un moteur et une boîte de vitesses d'un véhicule automobile, ce dispositif comprenant un embrayage (14) monté entre le moteur (10) et la boîte de vitesses (18), un actionneur d'embrayage (24), et des modules de pilotage qui comprennent un module (30) de supervision de la transmission mettant en oeuvre des stratégies de gestion de l'agrément de conduite qui pilotent l'embrayage en Couple et le moteur en vitesse et/ou en couple, un module (28) de pilotage de l'embrayage en couple qui détermine une consigne (44) d'une grandeur physique de commande de l'embrayage pour obtenir un couple transmissible souhaité dans l'embrayage à partir d'une consigne (42) fournie par le module (30) de supervision et de signaux de grandeurs physiques, d'état ou de commande mesurés sur le moteur, sur la boîte de vitesses et sur le reste du véhicule, et un module (26) de pilotage de l'actionneur (24) qui fournit un signal (46) de commande de l'actionneur en fonction d'une consigne fournie par le module de pilotage en couple (28) et de signaux de grandeurs physiques, d'état ou de commande mesurés sur le moteur, sur la boîte de vitesses et sur le reste du véhicule, **caractérisé en ce que** le module de supervision (30) comprend des moyens (50) d'élaboration d'une variation de consigne de couple transmissible par l'embrayage, à partir de signaux de commande (38) et d'informations (34) mesurées ou estimées sur le comportement dynamique de la transmission du véhicule, et des moyens (58) d'addition de cette variation à une consigne précédente (60) de couple transmissible.

2. Dispositif selon la revendication 1, **caractérisé en ce que** le module de supervision (30) comprend des moyens (52, 54) de calcul de limites maximale et minimale de la variation de consigne de couple transmissible et des moyens (56) d'application de ces limites à la variation de consigne de couple transmissible fournie par les moyens d'élaboration (50) précités.

3. Dispositif selon la revendication 1 ou 2, **caractérisé en ce que** les moyens (50) d'élaboration de la variation de consigne de couple transmissible comprennent une boucle ouverte (62) de détermination de la variation de consigne de couple à partir d'une grandeur physique (66) mesurée sur le véhicule, d'une grandeur temporelle (68) et/ou d'une intention du conducteur du véhicule ainsi que d'un profil prédéterminé (64) de variation, une boucle fermée (70) de détermination de la variation de consigne de couple transmissible par régulation ou asservissement d'une grandeur physique (82) mesurée sur le véhicule, et des moyens d'atténuation (90, 92, 96, 98) et d'addition (100) des variations des consignes de couple fournies par la boucle ouverte (62) et par la boucle fermée (70) précitées.

4. Dispositif selon la revendication 3, **caractérisée en ce que** la boucle fermée (70) comprend des moyens de régulation ou d'asservissement de ladite grandeur physique (82) qui déterminent une consigne de cette grandeur à partir d'un profil donné (72) de variation en fonction d'une grandeur physique (74) mesurée sur le véhicule, d'une grandeur temporelle (76) ou d'une intention du conducteur, des moyens (78, 84) de mise à l'échelle et de filtrage de cette consigne et de la grandeur physique (82) mesurée sur le véhicule et des moyens (80) de comparaison des signaux de sortie de ces moyens de mise à l'échelle et de filtrage pour générer un signal d'erreur appliqué à un correcteur (86) qui détermine une variation de couple transmissible permettant d'atteindre ou de suivre le profil donné (72) de variation de ladite grandeur physique.

5. Dispositif selon la revendication 3 ou 4, **caractérisé en ce que** la grandeur physique utilisée dans les moyens de régulation ou d'asservissement est l'accélération du véhicule, la vitesse ou l'accélération du moteur, ou la vitesse de glissement de l'embrayage.

6. Dispositif selon la revendication 4 ou 5, **caractérisé en ce que** les moyens (52, 54) de calcul de limites maximale et minimale de la variation de consigne de couple transmissible comprennent également une boucle ouverte et une boucle fermée de détermination de la limite correspondante, les sorties de ces boucles étant atténuées et ajoutées.

7. Dispositif selon l'une des revendications précédentes pour la commande de l'accouplement entre l'arbre de sortie du moteur et une boîte de vitesses comprenant deux arbres d'entrée (16) en parallèle reliés par deux embrayages (14) à l'arbre de sortie du moteur, **caractérisé en ce qu'**il comprend un seul module de supervision (50) précité pour le pilotage des deux embrayages (14), l'un des embrayages étant piloté en fermeture avec une consigne de couple transmissible qui varie en fonction d'une grandeur de régulation ou d'asservissement, l'autre embrayage étant piloté en ouverture en suivant une loi fixe prédéterminée.

## Claims

1. Controlled adaptive device for coupling between the engine and gearbox of a motor vehicle, this device comprising a clutch (14) mounted between the engine (10) and the gearbox (18), a clutch actuator (24) and control modules that comprise a transmission monitoring module (30) implementing strategies for managing ease of driving that control the clutch for torque and the engine for speed and/or torque, a module (28) for controlling the clutch for torque that determines a set value (44) of a physical quantity controlling the clutch in order to obtain a desired transmissible torque in the clutch from a set value (42) supplied by the monitoring module (30) and from physical-quantity, state or control signals measured on the engine, on the gearbox and on the rest of the vehicle, and a module (26) for controlling the actuator (24) that supplies a signal (46) controlling the actuator as a function of a set value supplied by the torque control module (28) and physical-quantity, state or control signals measured on the engine, on the gearbox and on the rest of the vehicle, **characterised in that** the monitoring module (30) comprises means (50) for producing a variation in set value for the torque transmissible by the clutch, from control signals (38) and measured or estimated information (34) on the dynamic behaviour of the vehicle transmission, and means (58) of adding this variation to a previous transmissible torque set value (60).

2. Device according to claim 1, **characterised in that** the monitoring module (30) comprises means (52, 54) of calculating maximum and minimum limits of the variation in transmissible torque set value and means (56) of applying these limits to the variation in transmissible torque set value supplied by the aforementioned production means (50).

3. Device according to claim 1 or 2, **characterised in that** the means (50) of producing the variation in transmissible torque set value comprise an open loop (62) for determining the variation in torque set value from a physical quantity (66) measured on the vehicle, a temporal quantity (68) and/or an intention of the vehicle driver as well as a predetermined variation profile, (64), a closed loop (70) for determining the variation in transmissible torque set value by regulation or slaving of a physical quantity (82) measured on the vehicle, and means of attenuating (90, 92, 96, 98) and adding (100) the variations in torque set values supplied by the aforementioned open loop (62) and closed loop (70).

4. Device according to claim 3, **characterised in that** the closed loop (70) comprises means of regulating or slaving the said physical quantity (82) that determine a set value of this quantity from a given variation profile (72) as a function of a physical quantity (74) measured on the vehicle, a temporal quantity (76) or an intention of the driver, means (78, 84) of scaling and filtering this set value and the physical quantity (82) measured on the vehicle and means (80) of comparing the signals output from these scaling and filtering means in order to generate an error signal applied to a corrector (86) that determines a variation in transmissible torque making it possible to achieve or follow the given profile (72) of variation in the said physical quantity.

5. Device according to claim 3 or 4, **characterised in that** the physical quantity used in the regulation or slaving means is the acceleration of the vehicle, the speed of acceleration of the engine, or the rate of slip of the clutch.

6. Device according to claim 3 or 4, **characterised in that** the means (52, 54) of calculating maximum and minimum limits of the variation in transmissible torque set value also comprise an open loop and a closed loop for determining the corresponding limit, the outputs of these loops being attenuated and added.

7. Device according to one of the preceding claims for controlling the coupling between the output shaft of the engine and a gearbox comprising two input shafts (16) in parallel connected by two clutches (14) to the output shaft of the engine, **characterised in that** it comprises a single aforementioned monitoring module (50) for controlling the two clutches (14), one of the clutches being controlled for closure with a transmissible torque set value that varies as a function of a regulation or slaving quantity, the other clutch being controlled for opening, following a predetermined fixed law.

## Patentansprüche

1. Gesteuerte adaptive Vorrichtung zur Verbindung zwischen einem Motor und einem Getriebe eines Kraftfahrzeugs, wobei diese Vorrichtung eine zwischen dem Motor (10) und dem Getriebe (18) angebrachte Kupplung (14), eine Kupplungsbetätigungseinrichtung (24) und Steuermodule umfasst, welche ein Modul (30) zur Überwachung der Kraftübertragung, das Strategien zur Regelung des Fahrkomforts anwendet, die die Kupplung nach dem Drehmoment und den Motor nach der Drehzahl und/oder nach dem Drehmoment steuern, ein Modul (28) zur Steuerung der Kupplung nach dem Drehmoment, das einen Sollwert (44) einer physikalischen Größe zur Steuerung der Kupplung bestimmt, um ausgehend von einem durch das Überwachungsmodul (30) gelieferten Sollwert (42) und von am Motor, am Getriebe und am Rest des Fahrzeugs gemessenen Signalen zu physikalischen Größen, Zustands- und Steuersignalen ein gewünschtes übertragbares Drehmoment in der Kupplung zu erzielen, sowie ein Modul (26) zur Steuerung der Betätigungseinrichtung (24) enthalten, das in Abhängigkeit von einem durch das Modul zur Steuerung nach dem Drehmoment (28) gelieferten Sollwert und von am Motor, am Getriebe und am Rest des Fahrzeugs gemessenen Signalen zu physikalischen Größen, Zustands- und Steuersignalen ein Steuersignal (46) zur Steuerung der Betätigungseinrichtung liefert, **dadurch gekennzeichnet, dass** das Überwachungsmodul (30) Mittel (50) zur Verarbeitung einer Veränderung des Sollwerts des durch die Kupplung übertragbaren Drehmoments ausgehend von Steuersignalen (38) und von Informationen (34), die am dynamischen Verhalten der Kraftübertragung des Fahrzeugs gemessen oder geschätzt werden, und Mittel (58) zur Addition dieser Veränderung zu einem vorangehenden Sollwert (60) des übertragbaren Drehmoments umfasst.

2. Vorrichtung nach Anspruch 1, **dadurch** gekenn- zeichnet, dass das Überwachungsmodul (30) Mittel (52, 54) zur Berechnung von maximalen und minimalen Grenzwerten für die Veränderung des Sollwerts des übertragbaren Drehmoments und Mittel (56) zur Anwendung dieser Grenzwerte auf die Veränderung des Sollwerts des übertragbaren Drehmoments, die durch die vorgenannten Verarbeitungsmittel (50) geliefert wird, umfasst.

3. Vorrichtung nach Anspruch 1 oder 2, **dadurch** gekenn- zeichnet, dass die Mittel (50) zur Verarbeitung der Veränderung des Sollwerts des übertragbaren Drehmoments einen offenen Wirkungskreis (62) zur Bestimmung der Veränderung des Drehmomentsollwerts ausgehend von einer am Fahrzeug gemessenen physikalischen Größe (66), einer zeitlichen Größe (68) und/oder einer Absicht des Fahrers des Fahrzeugs sowie eines vorbestimmten Änderungsprofils (64), und einen geschlossenen Wirkungskreis (70) zur Bestimmung der Veränderung des Sollwerts des übertragbaren Drehmoments durch Regelung oder Steuerung einer am Fahrzeug gemessenen physikalischen Größe (82), sowie Mittel zur Dämpfung (90, 92, 96, 98) und zur Addition (100) der durch den vorgenannten offenen Wirkungskreis (62) und durch den vorgenannten geschlossenen Wirkungskreis (70) gelieferten Veränderungen der Drehmomentsollwerte umfassen.

4. Vorrichtung nach Anspruch 3, **dadurch gekenn- zeichnet, dass** der geschlossene Wirkungskreis (70) Mittel zur Regelung oder Steuerung der besagten physikalischen Größe (82), die einen Sollwert dieser Größe ausgehend von einem gegebenen Änderungsprofil (72) in Abhängigkeit von einer am Fahrzeug gemessenen physikalischen Größe (74), einer zeitlichen Größe (76) oder einer Absicht des Fahrers bestimmen, Mittel (78, 84) zur Skalierung und Filterung dieses Sollwerts und der am Fahrzeug gemessenen physikalischen Größe (82), sowie Mittel (80) zum Vergleich der Ausgangssignale dieser Skalierungs- und Filtermittel umfasst, um ein Fehlersignal zu erzeugen, das an einen Korrektor (86) angelegt wird, der eine Veränderung des übertragbaren Drehmoments bestimmt, die es ermöglicht, das gegebene Änderungsprofil (72) der besagten physikalischen Größe zu erreichen oder zu verfolgen.

5. Vorrichtung nach Anspruch 3 oder 4, **dadurch** gekenn- zeichnet, dass die bei den Regel- oder Steuermitteln verwendete physikalische Größe die Beschleunigung des Fahrzeugs, die Drehzahl oder die Beschleunigung des Motors oder die Schlupfdrehzahl der Kupplung ist.

6. Vorrichtung nach Anspruch 4 oder 5, **dadurch** gekenn- zeichnet, dass die Mittel (52, 54) zur Berechnung der maximalen und minimalen Grenzwerte für die Veränderung des Sollwerts des übertragbaren Drehmoments außerdem einen offenen Wirkungskreis und einen geschlossenen Wirkungskreis zur Bestimmung des entsprechenden Grenzwerts umfassen, wobei die Ausgänge dieser Wirkungskreise gedämpft und hinzugefügt werden.

7. Vorrichtung nach einem der vorangehenden Ansprüche zur Steuerung der Verbindung zwischen der Ausgangswelle des Motors und einem Getriebe mit zwei parallel angeordneten Eingangswellen (16), die durch zwei Kupplungen (14) mit der Ausgangswelle des Motors verbunden sind, **dadurch gekennzeichnet, dass** sie ein einziges vorgenanntes Überwachungsmodul (50) zur Steuerung der beiden Kupplungen (14) umfasst, wobei eine der Kupplungen zum Schließen mit einem Sollwert des übertragbaren Drehmoments gesteuert wird, der sich in Abhängigkeit von einer Regel- oder Steuergröße verändert, während die andere Kupplung zum Öffnen unter Befolgung eines vorbestimmten festen Verlaufs gesteuert wird.
